# EUROPÄISCHE PATENTANMELDUNG

(11) **EP 1 270 327 A2**
(43) Veröffentlichungstag der Anmeldung: **02.01.2003**
(21) Anmeldenummer: 02012658.7
(22) Anmeldetag: 07.06.2002
(51) Int. Cl.: B60Q 1/38, B60Q 1/46, B60Q 1/44, B60Q 1/52

(54) **Verfahren zur Steuerung eines Blinklichtes**

(30) Priorität: 22.06.2001 DE 10130259
(71) Anmelder: AUDI AG, 85045 Ingolstadt (DE)
(72) Erfinder: Kahne, Thomas, 85296 Rohrbach (DE)
(74) Vertreter: Thielmann, Frank

(57) **Zusammenfassung**

Das Verfahren zur Steuerung mindestens eines Blinklichtes (BL) eignet sich zur Anzeige des Fahrtrichtungswechsels und/oder des Fahrzustandes, insbesondere Warnblinken, von Fahrzeugen. Das Blinklicht (BL) wird in Spalten (S1...Sn) unterteilt, die abwechselnd die Zustände "Ein" und "Aus" annehmen. Insbesondere zur Anzeige des Fahrtzustandes wird ein Verfahren vorgeschlagen, bei dem das Blinklicht (BL) in Zeilen (Z1...Zn) unterteilt ist, so daß eine Lauflichtanzeige von oben nach unten oder umgekehrt realisiert werden kann. Mit dem zuletzt genannten Verfahren kann das bekannte Warnblinken realisiert werden. Darüber hinaus kann es zur Signalisierung der Beschleunigungen, beispielsweise der Fahrtaufnahme nach einer Panne, verwendet werden.

## Beschreibung

Die Erfindung betrifft ein Verfahren zur Steuerung mindestens eines Blinklichtes zur Anzeige des Fahrtrichtungswechsels oder des Fahrzustandes von Fahrzeugen.

Zur Anzeige des Fahrtrichtungswechsels werden bei Fahrzeugen, wie z.B. Kraftfahrzeugen, Krafträdern, Motorfahrrädern, etc., Blinklichter und Blinkleuchten, die im Wechsel den Zustand "Ein" und den Zustand "Aus" annehmen, verwendet. Diese Blinklichter werden mittels Lichtquellen, beispielsweise Glühbirnen oder Halogenlampen, beleuchtet.

Nach dem Stand der Technik lassen sich dafür aber bereits auch LED-Lichtquellen verwenden. Diese haben den Vorteil von sehr geringer Baugröße und können dadurch zu Segmentgruppen zusammengefaßt werden, die in ihrer Leuchtstärke den herkömmlichen Leuchtmitteln nicht nachstehen.

Bei herkömmlichen Blinkleuchten wird in der Regel auf jeder Seite, d.h. links und rechts am Fahrzeug, ein Lichtflächenbereich im Wechsel aktiviert und deaktiviert; mit anderen Worten, das Blinklicht nimmt im Wechsel den Zustand "Ein" und "Aus" an, wobei zur Anzeige des Fahrtrichtungswechsels jeweils nur das auf der Seite befindliche Blinklicht angesteuert wird, nach welcher die Fahrtrichtung geändert werden soll. Zur Anzeige des Fahrtzustandes, d.h., ob das Fahrzeug eine Panne oder dergleichen hat, werden alle Blinkleuchten am Fahrzeug gleichzeitig aktiviert und deaktiviert. Diese Fahrtzustandsanzeige ist als Warnblinken bekannt.

Der Nachteil der vorhandenen Blinksysteme besteht darin, daß ein Verkehrsteilnehmer, für den eine Hälfte eines Fahrzeuges verdeckt ist oder für den sogar nur ein enger Ausschnitt um ein Blinklicht ersichtlich ist, nicht erkennen kann, ob das Fahrzeug die Warnblinkanlage eingeschaltet hat oder ob ein Fahrtrichtungswechsel angezeigt wird. Sieht der Verkehrsteilnehmer lediglich den Bereich eines inaktiven Blinklichtes, so wird er in keiner Weise darauf aufmerksam gemacht, daß der Fahrer im Begriff ist, einen Fahrtrichtungswechsel zu der Seite des für den Verkehrsteilnehmer verdeckten Blinklichtes durchzuführen. Diese Nachteile führen zu Gefahrensituationen im Straßenverkehr.

Aufgabe der Erfindung ist es, die Nachteile nach dem Stand der Technik durch die Schaffung eines neuen Blinklicht-Verfahrens und -Systems zu beseitigen.

Diese Aufgabe wird durch ein erstes Verfahren zur Steuerung mindestens eines Blinklichtes dadurch gelöst, daß der vom Blinklicht ausgeleuchtete Lichtflächenbereich in als Spalten ausgebildete senkrechte Teilbereiche unterteilt ist, wobei die Spalten in der vorgegebenen Fahrtrichtung im zeitlichen Abstand nacheinander den Zustand "Ein" annehmen. Damit läßt sich eine Laufrichtungsanzeige realisieren, mit der die Richtung angezeigt wird, in der ein Fahrtrichtungswechsel erfolgen soll.

Die Laufrichtungsanzeige läßt sich nach vorteilhaften Ausgestaltungen der Erfindung entweder so gestalten, daß eine einmal aktivierte Spalte solange aktiv bleibt, bis nacheinander alle weiteren Spalten aktiviert wurden, wonach der Vorgang wieder von vorne beginnt oder auch dadurch, daß in einem ersten Schritt die erste Spalte aktiviert und nach einer vorgegebenen Zeitspanne deaktiviert wird, in einem zweiten Verfahrensschritt die erste und die zweite Spalte aktiviert und nach einer vorgegebenen Zeitspanne wieder deaktiviert werden, wobei das Verfahren solange fortgesetzt wird, bis alle Spalten aktiviert wurden, wonach das Verfahren wieder von vorne beginnt.

Nach einer weiteren vorteilhaften Ausgestaltung des Verfahrens kann eine am Fahrzeug mittig angeordnete Blinkleuchte angesteuert werden. Neuere Kraftfahrzeuge haben meist in Höhe des oder am Heckfenster mittig angebrachte Bremsleuchten. Eine solche Bremsleuchte kann vorteilhaft mit einer Blinkleuchte kombiniert werden oder es kann gesondert eine Blinkleuchte mittig, unabhängig von der Bremsleuchte angebracht werden. Mit dem beschriebenen Verfahren kann dann auch bei einer mittig angeordneten Blinkleuchte mittels der Laufrichtungsanzeige die Richtung, in der ein Fahrtrichtungswechsel stattfinden soll, angezeigt werden.

Nach einer weiteren vorteilhaften Ausgestaltung der Erfindung wird wie bei herkömmlichen Blinkleuchten nur die Blinkleuchte angesteuert, die sich auf der Seite befindet, zu der die Fahrtrichtung geändert werden soll. Durch die Laufrichtungsanzeige ist es dem Verkehrsteilnehmer, der nur die Seite des aktiven Blinklichts sieht, im Gegensatz zu herkömmlichen Blinkleuchten möglich, zu erkennen, daß bei dem Fahrzeug nicht die Warnblinkanlage eingeschaltet ist, sondern daß ein Fahrtrichtungswechsel vorgenommen werden soll.

Wenn nach einer weiteren vorteilhaften Ausgestaltung der Erfindung mindestens eine rechte und mindestens eine linke Blinkleuchte angesteuert wird, ist es für einen Verkehrsteilnehmer, für den die Seite nach der der Fahrtrichtungswechsel erfolgen soll, verdeckt ist, anhand der Laufrichtungsanzeige des für ihn sichtbaren Blinklichtes trotzdem möglich, zu erkennen, nach welcher Seite das Fahrzeug abbiegen will.

Mit der waagerechten Laufrichtungsanzeige läßt sich theoretisch auch eine Fahrtzustandsanzeige, d.h. ein Warnblinken, realisieren. Wenn nämlich mindestens eine linke und eine rechte Blinkleuchte gleichzeitig angesteuert werden, d.h., wenn die Laufrichtungsanzeige beider symmetrisch angesteuerten Blinker gegengleich entweder nach außen oder nach innen verläuft. Bei einem mittig angeordneten Blinklicht müßten die Spalten so angesteuert werden, daß sie von außen nach innen oder von innen nach außen aktiviert werden.

Die Anzeige des Fahrtzustandes oder des Fahrtrichtungswechsels von Fahrzeugen kann jedoch auch gemäß einem weiteren Verfahren zur Steuerung mindestens eines Blinklichtes, wobei das Blinklicht die Zustände "Ein", d.h. aktiv und "Aus", d.h. inaktiv, annimmt, realisiert werden. Dieses Verfahren ist dadurch gekennzeichnet, daß der vom Blinklicht ausgeleuchtete Lichtflächenbereich in als Zeilen ausgebildete waagerechte Teilbereiche unterteilt ist, wobei die Zeilen im zeitlichen Abstand nacheinander den Zustand "Ein" annehmen. Im Gegensatz zum vorher beschriebenen Verfahren erfolgt also hier ein Blinken in waagerechten Zeilen von oben nach unten oder von unten nach oben.

Auch bei diesem Verfahren ist eine vorteilhafte Ausgestaltung dadurch gekennzeichnet, daß eine einmal aktivierte Zeile solange aktiv bleibt, bis nacheinander alle weiteren Zeilen aktiviert wurden, wonach der Vorgang wieder von vorne beginnt. Alternativ dazu kann auch ein Verfahren verwendet werden, wobei in einem ersten Schritt die erste Zeile aktiviert und nach einer vorgegebenen Zeitspanne deaktiviert wird, in einem zweiten Verfahrensschritt die erste und die zweite Zeile aktiviert und nach einer vorgegebenen Zeitspanne wieder deaktiviert werden, wobei das Verfahren solange fortgesetzt wird, bis alle Zeilen aktiviert wurden, wobei das Verfahren wieder von vorne beginnt.

Auch wenn sich das zweite Verfahren besonders zur Anzeige des Fahrtzustandes eignet, so ist die Anzeige des Fahrtrichtungswechsels ebenfalls möglich, wenn auch relativ eingeschränkt. Ein Fahrtrichtungswechsel nach rechts kann nämlich dadurch angezeigt werden, daß die rechte Blinkleuchte von oben nach unten und die linke Blinkleuchte von unten nach oben läuft, so daß die Leuchten im Uhrzeigersinn blinken. Bei einem Blinken entgegen dem Uhrzeigersinn kann ein Fahrtrichtungswechsel nach links angezeigt werden.

Vor allem aber eignet sich die Art des Blinkens mit waagerechten Teilbereichen dazu, den Fahrtzustand, d.h. ein Warnblinken oder das Verlangsamen oder Beschleunigen der Fahrt anzuzeigen. Werden nämlich mindestens ein Blinklicht oder alle Blinklichter so gesteuert, daß die Zeilen von oben nach unten aufleuchten, so kann dadurch bei entsprechender Konvention signalisiert werden, daß das Fahrzeug sich verlangsamt oder steht. Dies würde in etwa dem derzeitig bekannten Warnblinken entsprechen. Durch eine Laufblinklichtanzeige von unten nach oben könnte signalisiert werden, daß sich das Fahrzeug aus dem Stand wieder fortbewegt und/oder beschleunigt. Diese Laufblinklichtanzeige von unten nach oben oder von oben nach unten geht somit in ihrer Signalwirkung weit über das derzeit bekannte Warnblinken hinaus und würde damit zur erhöhten Sicherheit im Straßenverkehr führen.

In besonders vorteilhafter Weise läßt sich das Verzögern oder Beschleunigen eines Fahrzeugs dadurch anzeigen, daß die Zeilen geschwindigkeitsabhängig angesteuert werden, so daß das Lauflicht schneller oder langsamer läuft. Die geschwindigkeitsabhängige Steuerung ist durchaus auch bei dem waagerechten Lauflicht möglich. Damit kann dem nachfolgenden Verkehrsteilnehmer signalisiert werden, ob der Fahrtrichtungswechsel des vorausgehenden Fahrzeuges schnell oder langsam erfolgt.

Ein Blinklicht zur Durchführung des Verfahren enthält mindestens zwei beleuchtbare Spalten bzw. mindestens zwei beleuchtbare Zeilen.

Besonders vorteilhaft ist es, wenn das Blinklicht zur Durchführung des Verfahrens Leuchtmittel enthält, die in Form einer Matrix angeordnet sind, wobei mindestens die jeweils zu einer Spalte und die mindestens zu einer Zeile gehörenden Leuchtmittel gemeinsam ansteuerbar sind.

Ein Ausführungsbeispiel der Erfindung ist in der Zeichnung näher beschrieben. Dabei zeigen:
- Fig. 1: ein schematisiertes Blinklicht, das aus einer in mehrere Spalten unterteilten Zeile besteht,
- Fig. 2: ein schematisiertes Blinklicht, das aus mehreren untereinander angeordneten Zeilen besteht,
- Fig. 3: ein schematisiertes Blinklicht, das aus nebeneinander angeordneten Spalten und untereinander angeordneten Zeilen besteht.

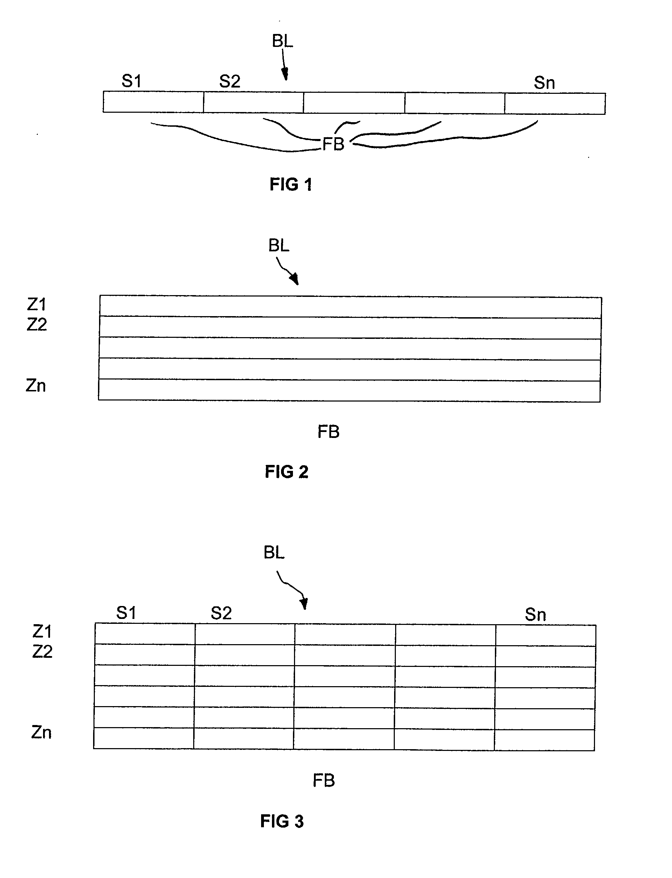

Das Blinklicht BL gemäß Fig. 1 ist in die Spalten S1 bis Sn unterteilt, die hier gleich groß sind. Es ist jedoch auch denkbar, die Spalten S1 bis Sn unterschiedlich groß zu machen, z.B. die Spalte S1 länger als die Spalte S2, die Spalte S2 länger als die Spalte S3 usw., so daß auch durch die Breite der Spalten S1 bis Sn sich optisch der Eindruck zunehmender Geschwindigkeit von Links nach Rechts ergibt. Dabei wurde davon ausgegangen, daß es sich hier um die rechte Blinkleuchte handelt. Für die linke Blinkleuchte gilt das entsprechende in umgekehrter Reihenfolge, d.h. die Spalte Sn müßte hier breiter sein als die nachfolgenden Spalten Sn-1 etc.. Das Blinklicht BL kann so angesteuert werden, daß zunächst die Spalte S1 aktiviert wird, dann die Spalte S1 wieder den Zustand "Aus" annimmt und nach einer Zeitspanne die Spalten S1 und S2 aktiviert werden usw. bis alle Spalten S1 bis Sn einmal aktiviert wurden, wonach der Vorgang wieder von vorne beginnt. Das Blinklicht BL kann aber auch so angesteuert werden, daß die Spalte S1 aktiviert wird und aktiviert bleibt und sodann die Spalte S2 aktiviert wird und zusammen mit der Spalte S1 und der Spalte S2 aktiviert bleibt usw.. Es wird vom optischen Eindruck und von der Signalwirkung abhängen, für welche Möglichkeit der Fachmann sich entscheidet.

Zum Anzeigen des Fahrtzustandes "Warnblinken" könnten zunächst die Spalte S1 und Sn aktiviert und wieder deaktiviert werden, sodann die Spalten S1 und S2 sowie Sn und Sn-1 aktiviert und wieder deaktiviert und dann alle Spalten S1 bis Sn aktiviert werden. Auch hier können alternativ die Spalten S1 und Sn aktiviert werden und aktiviert bleiben, wonach die Spalte S2 und Sn-1 aktiviert wird und aktiviert bleibt und schließlich die mittlere oder die beiden in der Mitte verbleibenden Spalten. Vorzugsweise sollte n ein Element der geraden Zahlen sein.
Das Blinklicht BL gemäß Fig. 2 zeigt die Zeilen Z1 bis Zn untereinander angeordnet, die zusammen den Lichtflächenbereich FB ergeben. Zur Anzeige des Fahrtrichtungswechsels kann hier wahlweise nur eine Zeile Z1 bis Zn oder alle Zeilen Z1 bis Zn verwendet werden, soweit es sich um ein Blinklicht BL handelt, das an einer Seite eines Fahrzeugs angeordnet ist, d.h., das geeignet ist, den Fahrtrichtungswechsel anzuzeigen, was bei einem mittig angeordneten Blinklicht BL selbstverständlich nicht der Fall wäre. Die Zeilen Z1 bis Zn können hier so angesteuert werden, daß ein Lauflicht von oben nach unten bzw. von unten nach oben entsteht.

Die Darstellung gemäß Fig. 3 zeigt ein Blinklicht BL, das in Spalten S1 bis Sn und Zeilen Z1 bis Zn eingeteilt ist. Es entsteht somit eine Matrix aus einzelnen Leuchtflächen S1, Z1; S2, Z1; Sn, Z1; S1, Z2; S2, Z2; usw.. Damit läßt sich eine Kombination der in Fig. 1 und Fig. 2 beschriebenen Möglichkeiten erreichen, so daß sowohl ein Fahrtrichtungswechsel durch waagrechte Lauflichter als auch die oben beschriebene Warnblink- bzw. Fahrtzustandsanzeige durch senkrechte Lauflichter realisiert werden kann.

Die verwendeten Leuchtmittel können herkömmliche aus dem Fahrzeugbereich bekannte Glühbirnen oder Halogenlämpchen sein. Nach dem Stand der Technik können dafür aber auch LED-Leuchtmittel verwendet werden, die bereits eine ausreichende Leuchtkraft besitzen und die sich aufgrund ihrer geringen Abmessungen sehr gut für die beschriebenen Anwendungen eignen.

## Patentansprüche

1. Verfahren zur Steuerung mindestens eines Blinklichtes (BL) zur Anzeige des Fahrtrichtungswechsels oder des Fahrtzustandes von Fahrzeugen, wobei das Blinklicht die Zustände "Ein", d. h. aktiv, und "Aus" annimmt, **dadurch gekennzeichnet, daß** der vom Blinklicht ausgeleuchtete Lichtflächenbereich (FB) in als Spalten (S1...Sn) ausgebildete senkrechte Teilbereiche unterteilt ist, wobei die Spalten (S1...Sn) in der vorgegebenen Fahrtrichtung im zeitlichen Abstand nacheinander den Zustand "Ein" annehmen.

2. Verfahren nach Anspruch 1, **dadurch gekennzeichnet, daß** eine einmal aktivierte Spalte (S1...Sn) so lange aktiv bleibt, bis nacheinander alle weiteren Spalten (S1...Sn) aktiviert wurden, wonach der Vorgang wieder von vorne beginnt.

3. Verfahren nach Anspruch 1, **dadurch gekennzeichnet, daß**
3.1 in einem ersten Schritt die erste Spalte (S1) aktiviert und nach einer vorgegebenen Zeitspanne deaktiviert wird,
3.2 in einem zweiten Verfahrensschritt die erste und die zweite Spalte (S1, S2) aktiviert und nach einer vorgegebenen Zeitspanne wieder deaktiviert werden,
3.3 das Verfahren so lange fortgesetzt wird, bis alle Spalten (S1...Sn) aktiviert wurden, wobei das Verfahren wieder von vorne beginnt.

4. Verfahren nach einem der vorstehenden Ansprüche, **dadurch gekennzeichnet, daß** eine am Fahrzeug mittig angeordnete Blinkleuchte angesteuert wird.

5. Verfahren nach Ansprüche 4, **dadurch gekennzeichnet, daß** mindestens eine mittig angeordnete Blinkleuchte so angesteuert wird, daß die Spalten von außen nach innen oder von innen nach außen aktiviert werden.

6. Verfahren nach einem der vorstehenden Ansprüche, **dadurch gekennzeichnet, daß** die Blinkleuchte angesteuert wird, die sich auf der Seite befindet, zu der die Fahrtrichtung geändert werden soll.

7. Verfahren nach einem der Ansprüche 1 bis 5, **dadurch gekennzeichnet, daß** mindestens eine rechte und mindestens eine linke Blinkleuchte angesteuert werden.

8. Verfahren nach Anspruch 7, **dadurch gekennzeichnet, daß** mindestens eine rechte und mindestens eine linke Blinkleuchte gegengleich angesteuert werden.

9. Verfahren zur Steuerung mindestens eines Blinklichtes (BL) zur Anzeige des Fahrtzustandes oder des Fahrtrichtungswechsels von Fahrzeugen, wobei das Blinklicht die Zustände "Ein", d. h. aktiv, und "Aus" annimmt, **dadurch gekennzeichnet, daß** der vom Blinklicht ausgeleuchtete Lichtflächenbereich (FB) in als Zeilen (Z1...Zn) ausgebildete waagrechte Teilbereiche unterteilt ist, wobei die Zeilen (Z1...Zn) im zeitlichen Abstand nacheinander den Zustand "Ein" annehmen.

10. Verfahren nach Anspruch 9, **dadurch gekennzeichnet, daß** eine einmal aktivierte Zeile (Z1...Zn) so lange aktiv bleibt, bis nacheinander alle weiteren Zeilen (Z1...Zn) aktiviert wurden, wonach der Vorgang wieder von vorne beginnt.

11. Verfahren nach Anspruch 9, **dadurch gekennzeichnet, daß**
11.1 in einem ersten Schritt die erste Zeile (Z1) aktiviert und nach einer vorgegebenen Zeitspanne deaktiviert wird,
11.2 in einem zweiten Verfahrensschritt die erste und die zweite Zeile (Z1, Z2) aktiviert und nach einer vorgegebenen Zeitspanne wieder deaktiviert werden,
11.3 das Verfahren solange fortgesetzt wird, bis alle Zeilen (Z1...Zn) aktiviert wurden, wobei das Verfahren wieder von vorne beginnt.

12. Verfahren nach einem der Ansprüche 9 bis 11, **dadurch gekennzeichnet, daß** eine am Fahrzeug mittig angeordnete Blinkleuchte angesteuert wird.

13. Verfahren nach einem der Ansprüche 9 bis 12, **dadurch gekennzeichnet, daß** mindestens eine linke und eine rechte Blinkleuchte angesteuert wird.

14. Verfahren nach einem der Ansprüche 9 bis 13, **dadurch gekennzeichnet, daß** die Zeilen (Z1...Zn) von oben nach unten aktiviert werden.

15. Verfahren nach einem der Ansprüche 9 bis 13, **dadurch gekennzeichnet, daß** die Zeilen (Z1...Zn) von unten nach oben aktiviert werden.

16. Verfahren nach einem der Ansprüche 9 bis 13, **dadurch gekennzeichnet, daß** die Zeilen (Z1...Zn) der mindestens einen rechten und der mindestens einen linken Blinkleuchte im oder gegen den Uhrzeigersinn angesteuert werden.

17. Blinklicht zur Durchführung des Verfahrens nach einem der Ansprüche 1 bis 8, **dadurch gekennzeichnet, daß** das Blinklicht mindestens zwei beleuchtbare Spalten (S1...Sn) enthält.

18. Blinklicht zur Durchführung des Verfahrens nach einem der Ansprüche 9 bis 16, **dadurch gekennzeichnet, daß** das Blinklicht mindestens zwei beleuchtbare Zeilen (Z1...Zn) enthält.

19. Blinklicht zur Durchführung des Verfahrens nach einem der Ansprüche 1 bis 16, **dadurch gekennzeichnet, daß** das Blinklicht Leuchtmittel enthält, die in Form einer Matrix angeordnet sind, wobei mindestens die jeweils zu einer Spalte (S1...Sn) und mindestens die jeweils zu einer Zeile (Z1...Zn) gehörenden Leuchtmittel gemeinsam ansteuerbar sind.
